# EUROPEAN PATENT APPLICATION

(11) **EP 2 071 516 A1**
(43) Date of publication of application: **17.06.2009**
(21) Application number: 08163720.9
(22) Date of filing: 04.09.2008
(51) Int. Cl.: G06T 11/40, G06T 15/40

(54) **Method for sorting graphical objects**

(30) Priority: 07.12.2007 EP 07023703
(71) Applicant: Osmosys S.A., 1292 Geneva (CH)
(72) Inventor: Thornborrow, Chris, 55-080 Katy Wroclawskie (PL)
(74) Representative: Pawlowski, Adam

(57) **Abstract**

A method for sorting graphical objects having an assigned depth coordinate, wherein at least two sets of graphical objects are requested to be drawn, each set comprising at least two graphical objects having a different depth coordinate and a request to select at least one set to sort is received, wherein the request covers fewer than all sets whereby sorting of the graphical objects of each selected set, is executed within the set, according to depth coordinates of the graphical objects.

## Description

The invention presented herein relates to graphics processing systems, and more particularly, to graphics processing systems performing drawing requests, wherein objects to be drawn have different depth positioning within a screen frame to be generated.

Computer generated graphical scenes enable users to visualize both two and three dimensional objects in a two or three dimensional graphical environment. They also provide an interaction between the computer and its user by means of graphical user interfaces (GUIs). Changes to a displayed frame are input to the computer, which then outputs them by modifying the displayed signal accordingly. With the recent development of high resolution display screens, for both personal computers and television sets, more details of increasingly complex geometric objects can be rendered within a single frame. Some examples of typical high resolution computer graphics applications, which generate graphical scenes, include graphical user interfaces of various devices, video games, etc.

Basically, a computer graphics generating system can be broken into three components: a frame buffer, a display, and a display controller.

The frame buffer is a digital memory for storing the image to be displayed as a series of binary values. The data in the frame buffer typically consists of colour values for every point that can be displayed on the display. An additional alpha channel is sometimes used to retain information about pixel transparency. The total amount of the memory required to drive the frame buffer is dependent on the resolution of the output signal, as well as the colour format and palette size.

The display is comprised of a screen having an array of picture elements, known as pixels (in case of full high-definition television sets there can be as many as 2073600 pixels per single frame). Each pixel represents a dot on the screen and can be programmed to represent various properties like colour or opacity. Thousands of individual pixels so programmed are used to represent a displayed image. It is these individual pixel values which are stored in the frame buffer.

The display controller is an interface used for passing the contents of the frame buffer to the display. The display controller reads the data from the display buffer and converts it into an output signal acceptable by the display. The video signal is fed to the display which subsequently displays the image.

Typically, a three-dimensional graphics rendering device that renders images into the frame buffer also stores additional information per pixel (e.g., Alpha, Z, etc.). Z-values represent a pixel's distance from the viewer. Typically, small Z-values indicate that the object is close to the observer, whereas large Z-values indicate that the object is further away. This additional Z storage per pixel is typically referred to as a Z-buffer.

By implementing a Z-buffer, depth coordinates values can be stored. The Z-buffer contains distance information which may be used in indicating whether one object is displayed in front of or behind another object. In most conventional Z-buffers, a Z-sort operation is performed. If the incoming pixel's data contains information that it should be placed closer (i.e., it has a smaller Z-value), the incoming colour data replaces the pre-existing data in the frame buffer, and the old Z-value is replaced by the new Z-value in the Z-buffer. When there is no more incoming data, the Z-sort is complete, and the contents of each frame buffer/Z-buffer location represents the final parameters for that particular pixel.

The typical Z-Sort approach does not however differentiate a single scene (display frame) into a number of entities within a scene, to which different sort could be applied. When the typical Z-Sort is invoked, all objects are sorted. An example of such a typical approach is a GL_DEPTH_TEST capability known from OpenGL (Open Graphics Library). Hence if a user would like to apply different sorting for different sets of objects, the user would have to execute a drawing procedure twice or more. Once for the first sorting and the other for the different sorting setup. This process is time-consuming.

Therefore there exists a problem of improving the flexibility of sorting, of objects in a graphics scene, according to a depth parameter. An advantageous result of such an improvement could also result in an improved performance of a graphical system utilising the method or device.

Since three dimensional graphics operations are complex and time consuming, it is also of greatest importance to optimise the process. One of the methods is to reduce the number of calls of a drawing function, typically called draw or paint. By applying a more flexible sorting arrangement, the drawing functions could be invoked less frequently.

Hence, there exists a problem of how to decrease performance requirements and increase flexibility of sorting arrangements.

It is therefore an objective of the invention presented herein to provide a graphics data processing method, for sorting graphical objects within a scene, that has low computing speed requirements and that is, at the same time, easy to control and setup.

The object of the invention is a method for sorting graphical objects having an assigned depth coordinate, the method comprising the steps of receiving a request to draw at least two sets of graphical objects, each set comprising at least two graphical objects having a different depth coordinate; receiving a request to select at least one set to sort, wherein the request covers fewer than all sets; sorting the graphical objects of each selected set, within the set, according to depth coordinates of the graphical objects.

The method may further comprise a step of drawing all graphical objects requested to be drawn or a step of organizing all drawing requests as a FIFO queue. The step of executing selecting request may comprise a step of saving a current pointer when sorting has been enabled. A step of disabling sorting may be invoked after the step of receiving a request to select and the step of receiving a request to draw. The sorting step may invoke sorting of the FIFO queue from the current pointer to the end of the FIFO queue, according to the depth coordinate of the objects placed in the FIFO queue. The depth coordinate may be a Z coordinate. In the sorting step a smaller depth coordinate value may indicate that the graphical object is closer to the observer.

The object of the invention is also a computer program comprising program code means for performing all the steps of the above-described method when said program is run on a computer, as well as a computer readable medium having computer-executable instructions performing all the steps of the above-described computer-implemented method.

This and other objects of the invention presented herein are accomplished in accordance with the principles of the presented invention by providing an improved method for sorting graphical objects. Further details and features of the system and method, its nature and various advantages will become more apparent from the accompanying drawing and the following detailed description of the preferred embodiments shown in a drawing, in which:
FIG. 1 shows a typical arrangement obtained without sorting;
FIG. 2 presents an example, of a typical arrangement, with sorting switched on;
FIG. 3 depicts an example of sorting with grouping, according to the present arrangement;
FIG. 4 is an exemplary scene; and
FIG. 5 is a block diagram illustrating steps of the procedure for handling drawing requests.

In a typical depth coordinate processing method, known for example from the OpenGL specification, a depth test procedure is established. In order to switch it on, the programmer has to set a flag at any time before the drawing command is invoked. The depth sorting is then performed after the drawing command has been invoked.

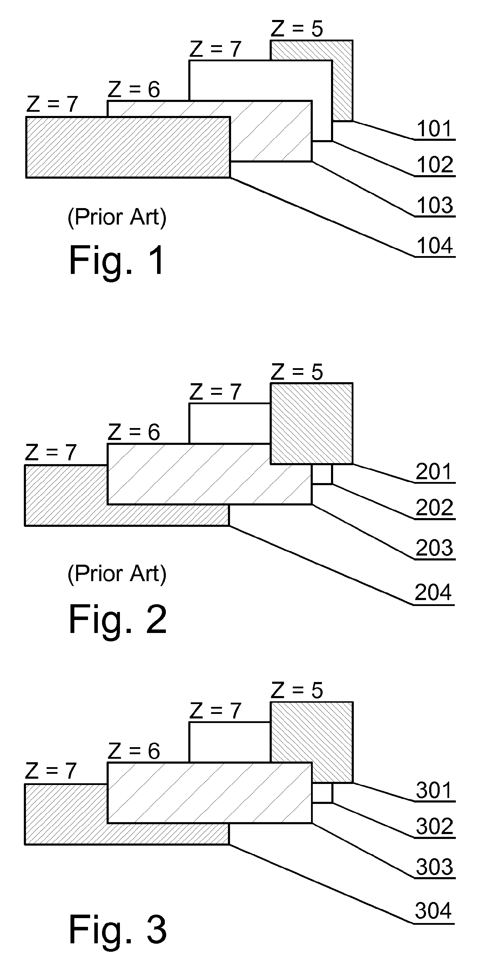

In the exemplary embodiments of the new method as well as examples of the prior art shown in FIG. 1 and FIG. 2, it has been assumed that a Z buffer is not present in the system. For the simplicity of examples given, a graphical object has a single depth coordinate assigned to it.

FIG. 1 shows a typical arrangement obtained without sorting. There are four rectangles 101 - 104 requested for drawing. The commands drawing the rectangles are programmed in the order 101, 102, 103 and finally 104. This can be defined in pseudocode as:
disable_depth_test
draw_rect(101)
draw_rect(102)
draw_rect(103)
draw_rect(104)
draw_frame

When the sorting is disabled, the rectangles will be drawn in the order they have been requested, regardless of the depth coordinate assigned to each of them.

FIG. 2 presents an example, of a typical arrangement, with sorting switched on. There are four rectangles 201 - 204 requested for drawing. The commands drawing the rectangles are programmed in the order 201, 202, 203 and finally 204, however in this case the order is irrelevant. This can be defined in pseudocode as:
draw_rect(201)
draw_rect(202)
draw_rect(203)
draw_rect(204)
enable_depth_test
draw_frame

When the sorting is enabled, the rectangles will be drawn in the order defined by the depth coordinate assigned to each of them. Therefore the rectangle 201, which has the lowest depth coordinate value of 5, will be drawn as a layer closest to the observer.

A disadvantage of such approach is that a programmer can either sort all or none of the drawn objects.

The present method introduces a new concept in sorting graphical objects that is based on selective sorting in groups of graphical objects. It will be obvious to one skilled in the art that the method may be implemented in software, hardware or a combination of both.

FIG. 3 depicts an example of sorting with grouping, according to the present arrangement. There are four graphical objects, in this case rectangles 301 - 304, requested for drawing. Each of the rectangles has a depth coordinate assigned, which is in the example expressed by the Z parameter. The commands drawing the rectangles are programmed in the order 301, 302, 303 and finally 304, however in this case the order is irrelevant only when objects of a single group are concerned. This can be defined in pseudocode as:
//define group 1
enable_depth_test
draw_rect(301)
draw_rect(302)
disable_depth_test
//define group 2
enable_depth_test
draw_rect(303)
draw_rect(304)
disable_depth_test
draw_frame

When the sorting is enabled, the rectangles will be drawn in the order defined by the depth coordinate assigned to each of them. Owing to such an arrangement two groups of objects have been defined. The first group comprises objects 301 and 302, which will be sorted within the group and the second group comprises objects 303 and 304 with will be sorted within the second group. Therefore the object 301 will be drawn in front of the object 302 and the object 303 will be drawn in front of the object 304. Moreover the second group of objects will be drawn in front of all objects of the first group.

As can be seen form the example, the enable_depth_test and the disable_depth_test commands serve as starting and ending points, marking the objects, which shall be sorted according to their depth coordinate. In this way a graphical objects sets selection is executed.

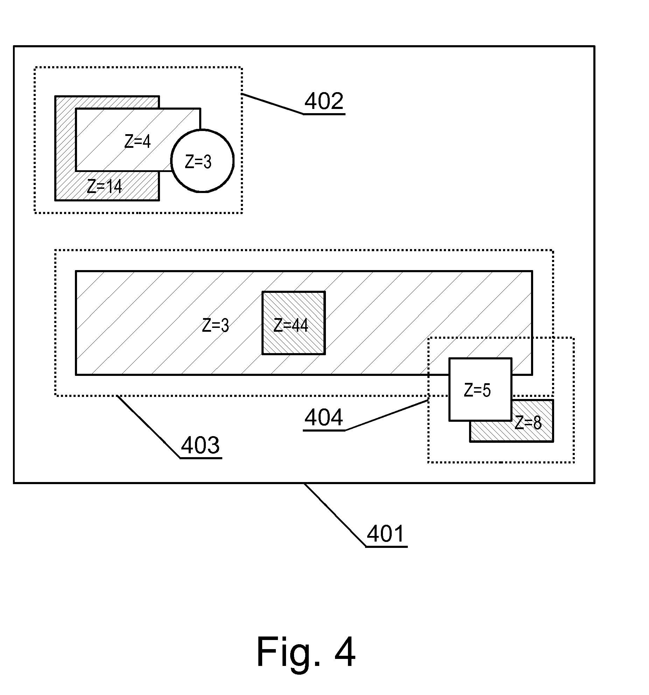

FIG. 4 depicts an exemplary scene defined with the use of selective sorting method. The scene 401 comprises three groups of objects 402, 403 and 404, which constitute three internal scenes within a frame. Those groups of objects can be sorted independently of each other, according to depth coordinates of the objects belonging to each group.

The scene shown in FIG. 4 can be defined in pseudocode as:
//define group 402
enable_depth_test
draw_rect(Z4)
draw_square(Z14)
draw_circle(Z3)
disable_depth_test
//define group 403
draw_rect(Z3)
draw_square(Z44)
//define group 404
enable_depth_test
draw_square(25)
draw_rect(Z8)
disable_depth_test
draw_frame

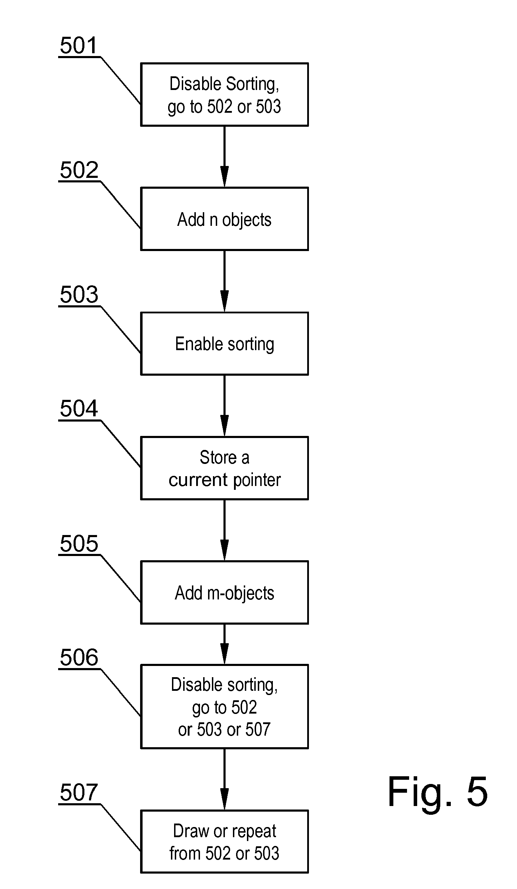

FIG. 5 is a block diagram illustrating steps of the procedure for handling drawing requests. The process starts at step 501 where a command disabling sorting is invoked. This can also be set as a default operation after a draw_frame request, which draws all requested graphical objects, has been processed. In such a case the process may start from step 502 or 503 when there are not any graphical objects to be drawn before the enabling of sorting in step 503 of the procedure. In step 502 objects that do not require sorting may be added to an objects queue, which is identified by a start_point pointer. The queue will typically be organized in a first in, first-out manner (FIFO) and hold pointers to commands drawing graphical objects.

After enabling sorting a current pointer is stored in step 504. Such pointer shall allow for identification of the next drawing command that will be added to the queue. For example it may be the size of a table that is an index pointing to a pointer to the next drawing command. This will identify the starting point for the subsequent sorting process. The drawing requests form a queue of commands drawing graphical objects. After the current pointer has been stored, the process goes to step 505 where m objects are requested to be drawn. All those graphical objects are added to the queue commands drawing graphical of objects. After the objects have been added, the system, in step 506, invokes the disable sorting command. The disable sorting command may also be invoked indirectly by the draw_frame function, which draws all requested graphical objects. When the disable sorting command is invoked, the queue of objects requested for drawing is sorted from the place indicated by the current pointer to its end. Because of this, only objects at the end of the queue are sorted. When the sorting is finished the saved current pointer may be assigned a null value. In another embodiment a flag may be defined, which would indicate whether the sorting is enabled. In such a case only after enabling the flag the current pointer could be modified and taken into account during sorting.

In another embodiment, of the present method, an ending pointer may be stored at a time when a disable sorting command is invoked. In such a case a set of pairs of current pointer and ending pointer may be stored and the sorting may be later invoked for groups defined with these stored pairs of pointers.

The pointers may be defined in the course of graphical objects addition process, as shown in exemplary FIG. 4, or be defined directly before the final draw_frame request that will draw all graphical objects from the queue.

From step 506 the process may advance to the drawing step 507, when all desired objects have been requested or to the step 502 in order to add some new objects, which do not require sorting or to the step 503 in order to add some new objects, which do require sorting.

It should be easily noticeable, to one skilled in the art, that the command drawing all objects in the queue may be invoked at any time. However to achieve the advantageous effect of the present invention, two groups of objects need to be added, wherein the group, to which sorting shall apply, shall comprise at least two graphical objects that have a different depth coordinate assigned.

The fact that the sorting according to the present method takes into account depth coordinates of graphical objects, does not render a Z-buffer essential to the method. Nevertheless the system may be applied in graphical environments utilising a Z-buffer.

It can be also easily recognised, by one skilled in the art, that the aforementioned method may be performed by one or more computer programs. Such computer programs are typically executed by utilizing the computing resources in a computing device such as personal digital assistants, cellular telephones, receivers and decoders of digital television or the like. Applications are stored in non-volatile memory, for example flash memory or volatile memory, for example RAM and are executed by a processor. These memories are exemplary recording media for storing computer programs comprising computer-executable instructions performing all the steps of the computer-implemented method according to the invention presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the invention. The presented preferred embodiments are exemplary only, and are not exhaustive of the scope of the invention presented herein. Accordingly, the scope of protection is not limited to the preferred embodiments described in the specification, but is only limited by the claims that follow.

## Claims

1. A method for sorting graphical objects having an assigned depth coordinate, the method comprising the steps of:
• receiving a request to draw at least two sets of graphical objects, each set comprising at least two graphical objects having a different depth coordinate;
• receiving a request to select at least one set to sort, wherein the request covers fewer than all sets;
• sorting the graphical objects of each selected set, within the set, according to depth coordinates of the graphical objects.

2. The method according to claim 1 **characterized in that** it further comprises a step of drawing all graphical objects requested to be drawn.

3. The method according to claim 1 **characterized in that** it further comprises a step of organizing all drawing requests as a FIFO queue.

4. The method according to claim 3 **characterized in that** the step of executing selecting request comprises a step of saving a current pointer when sorting has been enabled.

5. The method according to claim 4 **characterized in that** a step of disabling sorting is invoked after the step of receiving a request to select and the step of receiving a request to draw.

6. The method according to claim 5 **characterized in that** the sorting step invokes sorting of the FIFO queue from the current pointer to the end of the FIFO queue, according to the depth coordinate of the objects placed in the FIFO queue.

7. The method according to claim 1 **characterized in that** the depth coordinate is a Z coordinate.

8. The method according to claim 1 **characterized in that** in the sorting step a smaller depth coordinate value indicates that the graphical object is closer to the observer.

9. A computer program comprising program code means for performing all the steps of a method as claimed in any of claims 1 to 8 when said program is run on a computer.

10. A computer readable medium having computer-executable instructions performing all the steps of the computer-implemented method according to any of claims 1 to 8.
